# FASCICULE DE BREVET EUROPEEN

(11) **EP 3 233 439 B1**
(45) Date de publication et mention de la délivrance du brevet: **01.12.2021**
(21) Numéro de dépôt: 15816784.1
(22) Date de dépôt: 21.12.2015
(51) Int. Cl.: B29C 70/54, B29D 99/00, B29B 11/16, B29K 101/12, B29L 31/30

(54) **PROCEDE POUR LA PREPARATION DU DRAPAGE D'UNE PREFORME COMPOSITE**
VERFAHREN ZUR HERSTELLUNG DER ÜBERLEGFORMUNG EINER VERBUNDWERKSTOFFVORFORM
METHOD FOR PREPARING FOR THE DRAPE FORMING OF A COMPOSITE PREFORM

(30) Priorité: 19.12.2014 FR 1462877
(43) Date de publication de la demande: 25.10.2017
(73) Titulaire: Daher Aerospace, 41400 Saint Julien De Chedon (FR)
(72) Inventeur: PORTET, Stéphane, 44430 Le Loroux Bottereau (FR); VAUDOUR, Julie, 44118 La Chevrolière (FR)
(74) Mandataire: Ipside
(86) Numéro de dépôt international: PCT/EP2015/080872
(87) Numéro de publication internationale: WO 2016/097422

(56) Documents cités:
- FR-A1- 2 912 077

## Description

L'invention concerne un procédé pour la préparation du drapage d'une préforme composite en forme. L'invention est plus particulièrement, mais non exclusivement, adaptée au drapage automatique d'une préforme composite par placement de fibres pré-imprégnées d'un thermoplastique, le procédé objet de l'invention est adapté au drapage de fibre sèches ou de fibres pré-imprégnées d'un polymère thermodurcissable.

Le procédé objet de l'invention est également adapté à la réalisation de la préforme d'un panneau raidi, sur-drapée sur un ensemble de raidisseurs maintenus dans l'outillage.

Le drapage par placement de fibres, permet de réaliser une pièce composite en forme, par exemple une portion d'un fuselage d'aéronef, renforcée par des fibres continues. La dépose du premier pli est toujours problématique, plus particulièrement lorsque le polymère d'imprégnation des fibres ne possède pas une pégosité suffisante pour assurer l'adhésion des fibres à l'outillage et permettre d'appliquer aux fibres la tension nécessaire lors de la dépose. Diverses solutions sont connues de l'art antérieur mais ces solutions requièrent des opérations de préparation manuelle de l'outillage. De plus, la plupart des solutions de l'art antérieur sont adaptées au drapage automatisé d'une préforme préférentiellement sur une surface de forme convexe. Les solutions de l'art antérieur, notamment celles mettant en œuvre un tissu d'arrachage, sont complexes de mise en œuvre sur une forme non développable, ledit tissu ayant alors tendance à se froisser.

Le document FR 2 989 308 décrit un procédé pour l'accroche d'un premier pli lors du drapage d'une préforme composite fibreuse à matrice thermoplastique, lequel procédé comprend l'installation sur la surface de drapage de l'outillage de fibres céramiques imprégnées d'une résine thermoplastique La pose de fibres individuelles permet de suivre des formes d'outillage complexes, notamment non développables. Cependant cette solution de l'art antérieur est difficile à automatiser. Le document FR2912077 décrit un autre procédé pour l'accroche d'un premier pli lors du drapage d'une préforme fibreuse sur un outillage.

L'invention vise à résoudre les inconvénients de l'art antérieur et concerne à cette fin un procédé pour la réalisation d'un premier pli de drapage d'une préforme fibreuse sur un outillage, lequel procédé comprend les étapes consistant à :
a. réaliser une zone dite, zone d'accroche, sur la surface de drapage l'outillage, ladite zone étant solidaire de la surface de l'outillage ;
b. déposer un polymère par fabrication additive sur la surface de l'outillage, ledit dépôt passant sur la zone d'accroche ;
c. draper le premier pli en activant la pégosité du polymère déposé par fabrication additive de sorte à faire adhérer les fibres déposées sur la matière déposée par fabrication additive.

Ainsi l'utilisation d'un procédé de fabrication additive pour la dépose du film de maintien des fibres, permet de couvrir la surface de drapage de l'outillage, quelle que soit la forme de cette surface, et de réaliser cette dépose de manière automatique. L'épaisseur de matière déposée par fabrication additive est très faible, fonction de l'épaisseur minimale déposée autorisée par la technologie de fabrication additive considérée, de sorte que cette couche qui adhère à la préforme fibreuse après drapage n'a pas besoin d'en être détachée pour l'application finale.

L'invention est avantageusement mise en œuvre selon les modes de réalisation exposés ci-après lesquels sont à considérer individuellement ou selon toute combinaison techniquement opérante.

Selon un mode de réalisation du procédé objet de l'invention, la zone d'accroche est liée mécaniquement au moule et comprend une surface adaptée à l'adhésion du polymère déposé par fabrication additive. Ce mode d'accroche du film d'accrochage du premier pli est le plus stable.

Selon un autre mode de réalisation la zone d'accroche est matérialisée par un adhésif sensible à la pression. Ce mode d'accroche du film d'accrochage du premier pli est le plus économique.

Avantageusement, le polymère déposé en fabrication additive est un polymère thermoplastique. Ce type de matériau est adapté au procédé de fabrication additive par fusion de poudre qui permet un contrôle précis de la quantité de matière déposée.

Selon ce mode de réalisation, l'activation, à l'étape c), de la pégosité du polymère déposé par fabrication additive à l'étape b) est réalisée par chauffage lors du drapage. Ainsi par un choix judicieux du polymère déposé, la température de chauffage pour coller les fibres drapées au film d'accrochage est maintenue dans une plage compatible de sorte à ne pas induire de contraintes dans la préforme.

Avantageusement, la surface de drapage de l'outillage n'adhère pas au polymère déposé par fabrication additive. Ainsi, la préforme est séparée de l'outillage simplement en décollant le film d'accrochage du premier pli de la zone d'accroche, qui est une zone de surface réduite.

Selon un premier mode de mise en œuvre du procédé objet de l'invention, la surface de drapage de l'outillage est convexe et que la zone d'accroche est située au sommet de l'outillage. Ce mode de mise en œuvre permet un contrôle pus aisé de la tension des fibres drapées au cours de l'opération de drapage. Le film d'accrochage du premier pli reste lié à la face concave de la préforme après drapage.

Selon un autre mode de mise en œuvre du procédé objet de l'invention, la surface de drapage de l'outillage est concave et que la zone d'accroche est positionnée au creux de l'outillage. Dans ce mode de mise en œuvre le film d'accrochage du premier pli reste lié à la préforme après drapage, sur la face convexe de ladite préforme.

Avantageusement, le polymère déposé à l'étape est b) est déposé par bandes organisées en résille sur la surface de l'outillage. Ainsi la quantité de matière déposée au cours de l'étape b) est réduite.

Selon un mode de réalisation particulier, adapté à la fabrication de la préforme d'un panneau raidi, le procédé objet de l'invention, met en œuvre un outillage comportant un logement pour l'introduction d'un raidisseur, dont la semelle est en saillie par rapport à la surface de drapage, et le procédé comprend une étape consistant à :
d. réaliser par fabrication additive une zone de transition géométrique progressive entre le sommet de la semelle du raidisseur et la surface de drapage de l'outillage.

Ainsi la zone de transition réalisée par fabrication additive, assure une meilleure correspondance de forme entre la préforme drapée et les raidisseurs et une adhésion des fibres sur les bords du raidisseur, évitant ainsi la création de vide au voisinage dudit raidisseur, une tension plus uniforme des fibres lors du drapage et une réduction de la facettisation de la préforme.

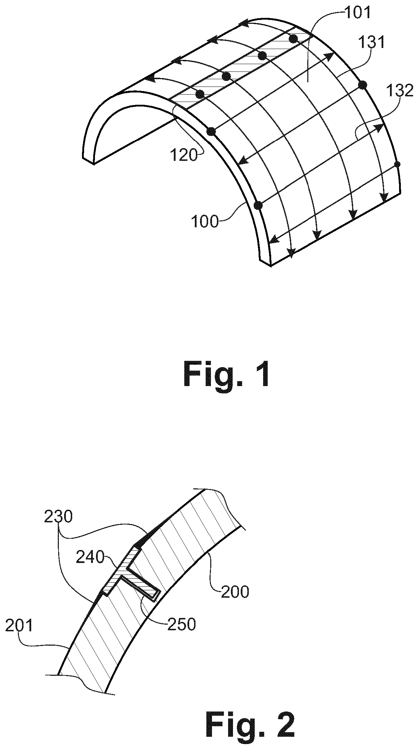

L'invention est exposée ci-après selon ses modes de réalisation préférés, nullement limitatifs, et en référence aux figures 1 et 2 dans lesquelles :
- la figure 1 montre schématiquement selon une vue en perspective, les différentes étapes de mise en oeuvre d'un exemple de réalisation du procédé objet de l'invention sur un outillage convexe ;
- et la figure 2, montre selon une vue partielle en section un autre exemple de mise en oeuvre du procédé objet de l'invention sur un outillage comprenant un logement pour un raidisseur.

Figure 1, le procédé objet de l'invention met en œuvre un outillage (100) en forme. Selon cet exemple de mise en œuvre, la surface (101) de drapage de l'outillage est une surface convexe. Selon une première étape de mise en œuvre de ce procédé, une zone (120) d'accroche est installée au sommet de l'outillage. Cette zone d'accroche est d'étendue réduite par rapport à la surface de l'outillage. Représentée comme une bande continue selon cet exemple de réalisation, ladite zone d'accroche est, selon un exemple de réalisation alternatif (non représenté), constituée de segments d'accroche à la surface de l'outillage. Ladite zone d'accroche (120) est destinée à maintenir la liaison entre le film d'accrochage du premier pli de drapage de la préforme et l'outillage, tout en permettant de désolidariser facilement ce film de l'outillage après drapage. À titre d'exemple non limitatif ladite zone (120) d'accroche est constituée d'une bande d'adhésif double face sensible à la pression. Selon un autre mode de réalisation ladite zone (120) d'accroche est une pièce mécanique liée à l'outillage (100), par exemple par un système à clés, dont la surface est traitée pour assurer une adhésion du polymère déposé par fabrication additive. Selon une deuxième étape, un polymère est déposé sur la surface (101) de drapage par un procédé de fabrication additive en démarrant le dépôt dans la zone d'accrochage. Différentes techniques de fabrication additive sont utilisables à cette fin, à titre d'exemple non limitatif, ledit film d'accrochage est déposé par une technique de projection d'une poudre d'un polymère thermoplastique fondu par une source laser. Selon un exemple de réalisation, ledit polymère est déposé sous la forme de lignes (131, 132) ou de bandes de largeur réduite selon un réseau en résille de sorte à couvrir la surface (101) de drapage de l'outillage. La dimension des mailles de la résille est adaptée en fonction de la forme et de la fibre drapée. Les lignes (131) ou bandes fixées à la zone (120) d'accroche sont déposées en premier, puis les autres lignes (132) ou bande, liées aux premières (131), sont déposées. Lesdites bandes (131, 132) ou lignes n'adhèrent pas à la surface (101) de drapage de l'outillage, laquelle surface (101) est préparée à cette fin.

Selon cet exemple de réalisation, cette résille de polymère thermoplastique sert d'ancrage au premier pli déposé par drapage lors de la troisième étape du procédé objet de l'invention. Ainsi les fibres pré-imprégnées ou sèches déposées par placement de fibre au cours de cette troisième étape, adhèrent à la résille par l'activation thermique du polymère déposé en fabrication additive. Cette activation thermique est réalisée en portant ledit polymère à une température suffisante pour qu'il soit pégueux, généralement à une température comprise entre la température de transition vitreuse et la température de fusion dudit polymère. Ladite activation thermique est réalisée par tout moyen connu de l'art antérieur et compatible avec la nature de la fibre drapée, par exemple, par contact mécanique avec une patte chaude, par soufflage d'air chaud, par laser, par micro-ondes ou par induction, sans que ces exemples ne soient exhaustifs. Selon ces deux derniers exemples de moyens d'activation thermique, la surface (101) de drapage de l'outillage est avantageusement traitée pour réagir aux rayonnements électromagnétiques dans la longueur d'onde appropriée. Selon un autre exemple de réalisation, le polymère formant la résille est allié, au moment de la dépose par fabrication additive, à une phase sensible aux rayonnements électromagnétiques, par exemple une poudre de ferrites. Après l'accrochage du premier pli, le drapage de la préforme fibreuse est poursuivi selon les techniques de drapage connues de l'art antérieur. Lorsque la préforme est drapée, celle-ci est retirée en désolidarisant la zone (120) d'accroche du film d'accrochage. Ledit film d'accrochage, ou la résille selon cet exemple de réalisation reste collé à la préforme. Alternativement, leditfilm d'accrochage est retiré de la surface de la préforme par usinage ou abrasion.

Figure 2, selon un autre exemple de mise en œuvre du procédé objet de l'invention, l'outillage (200) comporte des moyens (250) pour maintenir un raidisseur (240) dont la semelle fait saillie par rapport à la surface (201) de drapage. Selon ce mode de mise en œuvre, le procédé objet de l'invention comporte une étape consistant à réaliser, par fabrication additive des zones (230) de transition géométrique progressive entre les bords de la semelle et la surface (201) de drapage de l'outillage. La progressivité du relief qu'apportent ces zones de transition, permet aux fibres déposées de suivre ce relief tout en restant en tout point en contact avec la préforme ou lesdites zones de transition.

La description ci-avant et les exemples de réalisation montrent que l'invention atteint les objectifs visés, en particulier elle permet de réaliser automatiquement une couche d'accrochage du premier pli sur un outillage en forme en vue de la réalisation d'une préforme par drapage, notamment en placement de fibres.

## Revendications

1. Procédé pour la réalisation d'un premier pli de drapage d'une préforme fibreuse sur un outillage (100, 200), qui comprend les étapes consistant à :
a. réaliser une zone (120) dite, zone d'accroche, sur la surface (101, 201) de drapage l'outillage, ladite zone étant solidaire de ladite surface de drapage de l'outillage ;
b. déposer un polymère (131, 132) par fabrication additive sur la surface de l'outillage, ledit dépôt passant sur la zone d'accroche ;
c. draper le premier pli en activant la pégosité du polymère (131, 132) déposé par fabrication additive de sorte à faire adhérer les fibres déposées sur la matière déposée par fabrication additive.

2. Procédé selon la revendication 1, dans lequel la zone (120) d'accroche est liée mécaniquement au moule est comprend une surface adaptée à l'adhésion du polymère déposé par fabrication additive

3. Procédé selon la revendication 1, dans lequel la zone (120) d'accroche est matérialisée par un adhésif sensible à la pression.

4. Procédé selon la revendication 1, dans lequel le polymère déposé en fabrication additive est un polymère thermoplastique.

5. Procédé selon la revendication 4, dans lequel l'activation, à l'étape c), de la pégosité du polymère déposé par fabrication additive à l'étape b) est réalisée par chauffage lors du drapage..

6. Procédé la revendication 5, dans lequel le matériau constituant la surface de drapage de l'outillage n'adhère pas au polymère déposé par fabrication additive.

7. Procédé selon la revendication 1, dans lequel la surface de drapage de l'outillage est convexe et que la zone (120) d'accroche est située au sommet de l'outillage.

8. Procédé selon la revendication 1, dans lequel la surface de drapage de l'outillage est concave et que la zone d'accroche est positionnée au creux de l'outillage.

9. Procédé selon la revendication 1, dans lequel le polymère déposé à l'étape est b) est déposé par bandes (131, 132) organisées en résille sur la surface de l'ouillage.

10. Procédé selon la revendication 7, dans lequel l'outillage (200) comporte un logement (250) pour l'introduction d'un raidisseur (240), dont la semelle est en saillie par rapport à la surface (201) de drapage, et qu'il comprend une étape consistant à :
d. réaliser par fabrication additive une zone (230) de transition géométrique progressive entre le sommet de la semelle du raidisseur (240) et la surface (201) de drapage de l'outillage.

## Patentansprüche

1. Verfahren zur Herstellung einer ersten Überlegefaltung einer Faservorform auf einem Werkzeug (100, 200), das die folgenden Schritte umfasst:
a. Herstellen einer Haftzone (120) auf der Überlegeoberfläche (101, 201) des Werkzeugs, wobei die Zone mit der Überlegeoberfläche des Werkzeugs fest verbunden ist;
b. Aufbringen eines Polymers (131, 132) durch additive Fertigung auf die Oberfläche des Werkzeugs, wobei die Aufbringung auf der Haftzone erfolgt;
c. Überlegen der ersten Faltung durch Aktivieren der Klebrigkeit des durch additive Fertigung aufgebrachten Polymers (131, 132) derart, dass die durch additive Fertigung aufgebrachten Fasern auf dem Material haften.

2. Verfahren nach Anspruch 1, wobei die Haftzone (120) mechanisch mit der Form verbunden ist und eine an das Haften des durch additive Fertigung aufgebrachten Polymers angepasste Oberfläche umfasst.

3. Verfahren nach Anspruch 1, wobei die Haftzone (120) durch einen druckempfindlichen Haftstoff materialisiert ist.

4. Verfahren nach Anspruch 1, wobei das durch additive Fertigung aufgebrachte Polymer ein thermoplastisches Polymer ist.

5. Verfahren nach Anspruch 4, wobei die Aktivierung der Klebrigkeit in Schritt c) des in Schritt b) durch additive Fertigung aufgebrachten Polymers durch Erwärmen beim Überlegen durchgeführt wird.

6. Verfahren nach Anspruch 5, wobei das Material, das die Überlegeoberfläche des Werkzeugs bildet, nicht am durch additive Fertigung aufgebrachten Polymer haftet.

7. Verfahren nach Anspruch 1, wobei die Überlegeoberfläche des Werkzeugs konvex ist und sich die Haftzone (120) an der Spitze des Werkzeugs befindet.

8. Verfahren nach Anspruch 1, wobei die Überlegeoberfläche des Werkzeugs konkav ist und die Haftzone in der Aushöhlung des Werkzeugs positioniert ist.

9. Verfahren nach Anspruch 1, wobei das in Schritt b) aufgebrachte Polymer in netzartig organisierten Bändern (131, 132) auf die Oberfläche des Werkzeugs aufgebracht wird.

10. Verfahren nach Anspruch 7, wobei das Werkzeug (200) eine Aufnahme (250) für das Einsetzen einer Verstärkung (240) aufweist, deren Sohle in Bezug auf die Überlegeoberfläche (201) hervorsteht und dass es einen folgenden Schritt umfasst:
d. Herstellen, durch additive Fertigung, einer schrittweisen geometrischen Übergangszone (230) zwischen der Spitze der Sohle der Verstärkung (240) und der Überlegeoberfläche (201) des Werkzeugs.

## Claims

1. A method for making a first draping ply of a fibrous preform on a tooling (100, 200) which comprises the steps consisting in:
a. making an area (120) called, catch area, on the draping surface (101, 201) of the tooling, said area being secured to said draping surface of the tooling;
b. depositing a polymer (131, 132) by additive manufacturing over the surface of the tooling, said deposition being carried out over the catch area;
c. draping the first ply while activating the tackiness of the polymer (131, 132) deposited by additive manufacturing so as to make the deposited fibres adhere on the polymer deposited by additive manufacturing.

2. The method according to claim 1, wherein a catch area (120) is mechanically bonded to the mould and comprises a surface suited for the adhesion of the polymer deposited by additive manufacturing.

3. The method according to claim 1, wherein the catch area (120) is materialised by a pressure-sensitive adhesive.

4. The method according to claim 1, wherein the polymer deposited by additive manufacturing is a thermoplastic polymer.

5. The method according to claim 4, wherein the activation, at step c), of the tackiness of the polymer deposited by additive manufacturing at step b) is carried out by heating during the draping.

6. The method according to claim 5, wherein the material forming the draping surface of the tooling does not adhere to the polymer deposited by additive manufacturing.

7. The method according to claim 1, wherein the draping surface of the tooling is convex and the catch area (120) is located at the top of the tooling.

8. The method according to claim 1, wherein the draping surface of the tooling is concave and the catch area is positioned in the cavity of the tooling.

9. The method according to claim 1, wherein the polymer deposited at step b) is deposited in strips (131, 132) organised in a net-like fashion over the surface of the tooling.

10. The method according to claim 7, wherein the tooling (200) includes a housing (250) for the introduction of a stiffener (240), whose sole projects from the draping surface (201), and it comprises a step consisting in:
d. making by additive manufacturing a progressive geometric transition area (230) between the top of the sole of the stiffener (240) and the draping surface (201) of the tooling.
